# EUROPÄISCHE PATENTSCHRIFT

(11) **EP 3 701 769 B1**
(45) Veröffentlichungstag und Bekanntmachung des Hinweises auf die Patenterteilung: **20.07.2022**
(21) Anmeldenummer: 18789089.2
(22) Anmeldetag: 16.10.2018
(51) Int. Cl.: H05B 6/64, H05B 6/68, H05B 6/50, H05B 6/62, A23L 3/365, A23L 5/10, F24C 7/08, F25D 23/12, F24C 1/04

(54) **SPEISENBEHANDLUNGSGERÄT**
FOOD TREATMENT DEVICE
UNITÉ DE TRAITEMENT D'ALIMENTS

(30) Priorität: 26.10.2017 DE 102017219286
(43) Veröffentlichungstag der Anmeldung: 02.09.2020
(73) Patentinhaber: BSH Hausgeräte GmbH, 81739 München (DE)
(72) Erfinder: BÖTTCHER, Christian, 83278 Traunstein (DE); KAISER, Andreas, 83128 Halfing (DE); KUCHLER, Markus, 83257 Gstadt am Chiemsee (DE)
(86) Internationale Anmeldenummer: PCT/EP2018/078163
(87) Internationale Veröffentlichungsnummer: WO 2019/081261

(56) Entgegenhaltungen:
- EP-A1- 1 489 888
- EP-A1- 1 514 503
- EP-A1- 2 326 141
- WO-A1-2004/091260
- WO-A1-2008/102334
- DE-A1- 10 117 937
- DE-A1-102014 106 031
- FR-A1- 2 212 735
- US-A1- 2004 232 140

## Beschreibung

Die Erfindung betrifft ein Speisenbehandlungsgeräts gemäß den Merkmalen von Anspruch 1.

Die Erfindung betrifft auch ein Verfahren zum Betreiben des Speisenbehandlungsgeräts. Die Erfindung ist insbesondere vorteilhaft anwendbar auf Haushaltsgeräte.

Von der Firma FRIGONDA ist ein Mikrowellengerät mit einem integrierten Schockfroster und Kühlschrankfunktion bekannt. Soll eine eingefrorene Speise aufgetaut werden, wird dazu die grundsätzlich bekannte Mikrowellen-Erzeugungseinrichtung des Geräts verwendet. Jedoch ist es nachteilig, dass das Auftauen vergleichsweise lange dauert, viel Energie verbraucht und zudem die Speise lokal ungleichmäßig behandelt wird. Es kann sogar dazu kommen, dass einige Bereiche der Speise noch nicht aufgetaut sind, während andere Bereiche bereits gegart werden.

SE 1650029 A1 offenbart eine Heizvorrichtung zum Auftauen / Erwärmen einer verderblichen dielektrischen Last. Die Heizvorrichtung umfasst: eine Heizkammer zum Halten der verderblichen dielektrischen Last während des Auftauens / Aufwärmens derselben, eine Sendereinheit, die elektromagnetische Energie mit vordefinierten spektralen Eigenschaften erzeugt, ein emittierendes Element, das ein elektromagnetisches Feld in der verderblichen dielektrischen Last auf der Basis der elektromagnetischen Energie von der Sendeeinheit erzeugt, eine Abstimmschaltung, die eine Gesamtimpedanz des emittierenden Elements, der Abstimmschaltung und der Heizkammer so einstellt, dass die Gesamtimpedanz mit einer Ausgangsimpedanz der Sendeeinheit übereinstimmt, und eine Steuereinheit zum Messen der Gesamtimpedanz während des Auftauens / Erwärmens der verderblichen dielektrischen Last und wiederholtes Erzeugen mindestens eines Steuersignals, das bewirkt, dass die Abstimmschaltung die Gesamtimpedanz an die Ausgangsimpedanz der Sendereinheit anpasst. Die Steuereinheit stellt einen Anfangswert des mindestens einen Steuersignals basierend auf einer Schätzung eines Volumens der verderblichen dielektrischen Last ein.

DE112014003833 T5 offenbart eine Heizvorrichtung zum Auftauen gefrorener Lebensmittel durch Erwärmen. Die Heizvorrichtung enthält einen Heizraum, in dem ein Lebensmittel angeordnet ist, einen Dampferzeuger, um dem Heizraum Dampf zuzuführen, um auf der Oberfläche des Lebensmittels einen Wasserfilm zu bilden, ein Magnetron, um dem Heizraum Mikrowellen zuzuführen, um auf das Lebensmittel ein dielektrisches Erwärmen anzuwenden, und eine Steuereinheit, um den Dampferzeuger und das Magnetron zu steuern. Die Steuereinheit führt den ersten Schritt des Betreibens des Dampferzeugers und den zweiten Schritt des Betreibens des Dampferzeugers und des Magnetrons nach dem ersten Schritt aus. Beim Auftauen und Erwärmen eines gefrorenen Lebensmittels kann der Mikrowellenabsorptions-Wirkungsgrad auf der gesamten Lebensmitteloberfläche durch Zuführen von Dampf zu dem Heizraum, um einen ausreichenden Wasserfilm auf der gesamten Lebensmitteloberfläche zu bilden, verbessert werden. Im Ergebnis sollen ein gleichmäßiges Auftauen und Erwärmen ohne ungleichmäßige Erwärmung erzielt werden können.

DE 699 33 944 T2 offenbart ein Verfahren zum Auftauen gefrorener Lebensmittel in einem Mikrowellenofen, der eine Mikrowellen-Quelle, einen Ofen-Hohlraum sowie eine Steuerungseinheit umfasst, wobei das Verfahren die Schritte des Bereitstellens der Steuerungseinheit mit einem Eingabesignal, das Informationen über das Gewicht des Lebensmittels zur Steuerung des Auftauens enthält, umfasst; wobei die Steuerungseinheit bewirkt, dass die Mikrowellen-Quelle Mikrowellen zuführt, die eine durchschnittliche Leistung von mehr als 400 W, vorzugsweise mehr als 600 Watt und vorteilhafterweise mehr als 800 W aufweist, in den Ofen-Hohlraum während eines ersten Zeitintervalls, während dem die gesamte Mikrowellenenergie, die zum Ofen-Hohlraum zugeführt wird, 50 J pro Gramm Lebensmittel übersteigt, vorzugsweise 80 J pro Gramm Lebensmittel und vorteilhafterweise 120 J pro Gramm Lebensmittel übersteigt; die Steuerungseinheit bewirkt, dass die Mikrowellen-Quelle während einer Warteperiode nach dem ersten Zeitintervall abgeschaltet ist; und die Steuerungseinheit bewirkt, dass die Mikrowellen-Quelle in den Ofen-Hohlraum während eines zweiten Zeitintervalls, während dem die gesamte Mikrowellen-Energie, die zum Ofen-Hohlraum zugeführt wird, 40 J pro Gramm Lebensmittel, vorzugsweise 60 J pro Gramm Lebensmittel und vorteilhafterweise 90 J pro Gramm Lebensmittel übersteigt, Mikrowellen zuführt, die eine Durchschnittsleistung von mehr als 400 W, vorzugsweise mehr als 600 W und vorteilhafterweise mehr als 800 W aufweisen.

EP1489888A1 offenbart eines aus dem Stand der Technik bekanntes Speisenbehandlungsgerät.

Es ist die Aufgabe der vorliegenden Erfindung, die Nachteile des Standes der Technik zumindest teilweise zu überwinden.

Diese Aufgabe wird gemäß den Merkmalen der unabhängigen Ansprüche gelöst. Vorteilhafte Ausführungsformen sind Gegenstand der abhängigen Ansprüche, der Beschreibung und der Zeichnungen.

Dieses Speisenbehandlungsgerät ermöglicht mittels der Niederfrequenz-Erzeugungseinrichtung vorteilhafterweise ein besonders effektives und gleichmäßiges Auftauen von gefrorenen Speisen mit vergleichsweise preiswerten Mitteln. Bei der niederfrequenten Anregung wird der Effekt der dielektrischen Verluste ausgenutzt, um die Speise bzw. das Gargut zu erwärmen, insbesondere von Wasser, was insbesondere ein effektives Auftauen erlaubt. Mittels der mindestens einen ersten Funktionseinheit wird eine zusätzliche oder alternative Behandlung von in dem Speisenbehandlungsraum befindlicher Speise ermöglicht.

Auch ergibt sich ein Komfort-Gewinn für den Nutzer und die Erweiterung der Möglichkeiten dadurch, dass Speisen nicht mehr zwischen verschiedenen spezialisierten Hausgeräten umgelagert werden müssen, sondern alle mit diesen Speisen zusammenhängenden Prozessschritte in einem Gerät erledigt werden können. Ein Speisenbehandlungsprozess kann damit vollautomatisch und voreinstellbar mit oder ohne Nutzerinteraktion ablaufen. Auch wird so vorteilhafterweise die Möglichkeit gegeben, Platz in einer Küche zu sparen. Andere Haushaltsgeräte, die zu der mindestens einen ersten Funktionseinheit analoge Funktionen bieten, können weiterhin ihre Hauptfunktionen erfüllen.

Es ist eine Weiterbildung, dass das Speisenbehandlungsgerät ein Haushaltsgerät ist, insbesondere ein Tischgerät oder ein Einbaugerät. So wird einem Endnutzer im Haushalt eine besonders hohe Flexibilität bei der Speisenbehandlung bereitgestellt.

Die Niederfrequenz-Erzeugungseinrichtung ist dazu eingerichtet, Wellen mit einer niedrigeren Frequenz (im Folgenden ohne Beschränkung der Allgemeinheit auch als "niederfrequente Wellen" bezeichnet) als der Mikrowellenfrequenz in dem Speisenbehandlungsraum zu erzeugen.

Das Speisenbehandlungsgerät weist insbesondere eine Steuereinrichtung auf, mittels der die mindestens eine erste Funktionseinheit und die Niederfrequenz-Erzeugungseinrichtung unabhängig voneinander betätigbar sind, insbesondere ansteuerbar bzw. betreibbar sind.

Gemäß der Erfindung, weist die mindestens eine erste Funktionseinheit eine Mikrowellen-Erzeugungseinrichtung zum Einbringen von Mikrowellen mit einer zugehörigen Mikrowellenfrequenz in den Speisenbehandlungsraum auf.

Diese ist dazu geeignet, Speise besonders schnell zu erwärmen, insbesondere auch zu garen. Unter einem Garen kann im Folgenden ein Garen im engeren Sinne, ein Erwärmen und/oder Warmhalten von Speisen verstanden werden.

Die Mikrowellen-Erzeugungseinrichtung ist einen Mikrowellengenerator, z.B. in Form eines Magnetrons oder als Leistungshalbleiter-Schaltung, zum Erzeugen von Mikrowellen aufweisen. Diese können direkt oder über einen Wellenleiter in den Speisenbehandlungsraum eingebracht werden. Das Speisenbehandlungsgerät ist mikrowellendicht. Um ein Austreten von Mikrowellen aus der Tür zu verhindern, kann sie mit einem Metallgitter und / oder einer Türfalle (Mikrowellenfalle) belegt sein.

Es ist eine Ausgestaltung, dass die mindestens weitere erste Funktionseinheit mindestens einen elektrisch betriebenen Widerstandsheizkörper aufweist, um den Speisenbehandlungsraum zu erhitzen. Dadurch wird vorteilhafterweise eine Backofenfunktion bereitgestellt. Der mindestens eine elektrisch betriebene Widerstandsheizkörper kann als Unterhitze-Heizkörper, Oberhitze-Heizkörper, Grillheizkörper, Heißluft-Heizkörper (Ringheizkörper) usw. ausgebildet sein bzw. dienen. Auch kann das Auftauen durch Erwärmen des Speisenbehandlungsraums mittels Aktivierung des mindestens einen Widerstandsheizkörpers unterstützt werden.

Gemäß der Erfindung beinhaltet das Speisenbehandlungsgerät ein Kälteaggregat auf und der Speisenbehandlungsraum ist ein thermisch isolierter Speisenbehandlungsraum.

Dadurch, dass der Speisenbehandlungsraum thermisch isoliert ist, kann er vorteilhafterweise mittels des Kälteaggregats gekühlt werden, z.B. ähnlich zu einem Kühlschrank und/oder einem Gefrierfach. Insbesondere kann der Speisenbehandlungsraum auf eine Temperatur in einem Temperaturbereich zwischen [+4°C und +8°C] gekühlt werden, insbesondere in einem Temperaturbereich zwischen [-4°C und +8°C], insbesondere in einem Temperaturbereich zwischen [-8°C und +8°C], insbesondere in einem Temperaturbereich zwischen [-12°C und +8°C], insbesondere in einem Temperaturbereich zwischen [-18°C und +8°C], insbesondere in einem Temperaturbereich zwischen [-24°C und +8°C], oder sogar noch kühler. Das Speisenbehandlungsgerät kann auch dazu eingerichtet sein, in dem Behandlungsraum befindliche Speise schockzufrosten. Der Speisenbehandlungsraum kann eine frontseitige Beschickungsöffnung aufweisen, die mittels einer Tür verschließbar ist.

Durch die Verwendung eines Kälteaggregats wird besonders vorteilhafterweise die Möglichkeit gegeben, Platz in einer Küche zu sparen. Beispielsweise ist es für Gefrierschränke ungünstig, ein Fach für eine spezielle Auftaufunktion bereitzuhalten, da hierdurch das nutzbare Lagervolumen des Gefrierschranks sinkt, während das Volumen des vorliegenden Speisenbehandlungsgeräts noch für das Auftauen frei wäre, weil ein Auftauvorgang und/oder ein Garvorgang erst später gestartet wird und das Gerät damit noch nicht belegt ist. Gleiches gilt z.B. für ein Schockfrosten nach dem Garen oder ein Kühlen bis zum eigentlichen Garprozess. Unter "Auftauen" kann insbesondere die Umwandlung von gefrorenem Wasser in der Speise in flüssiges Wasser verstanden werden, was typischerweise dann erreicht ist, wenn die Speise eine Temperatur von ca. -2°C bis 0°C erreicht hat. Unter Auftauen kann aber auch verstanden werden, dass die Speise etwa Zimmertemperatur erreicht. Das Erwärmen einer Speise zwischen ca. -2°C bis 0°C und Zimmertemperatur kann auch als "Weitertauen" bezeichnet werden und kann einen Teil eines Auftauablaufs oder bereits einen Teil eines Erwärmungs- bzw. Garablaufs darstellen.

Gemäß der Erfindung beträgt die Frequenz der Mikrowellen-Erzeugungseinrichtungs 902 MHz oder mehr, insbesondere 915 MHz oder 2,45 GHz.

Dies ergibt den Vorteil, dass herkömmliche Mikrowellen-Erzeugungseinrichtungen zum Erzeugen der Mikrowellenstrahlung verwendet werden können.

Es ist eine Ausgestaltung, dass die niederfrequenten Wellen eine Frequenz von weniger als 500 MHz aufweisen. Dies ergibt den Vorteil, dass sich die im gefrorenen Zustand befindlichen Wassermoleküle besonders effektiv anregen lassen.

Es ist eine Weiterbildung, dass die niederfrequenten Wellen eine Frequenz aufweisen, die in einem oder mehreren der folgenden Frequenzbänder liegt:
- [6,765 MHz bis 6,795 MHz]
- [13,553 MHz bis 13,567 MHz]
- [26,957 MHz bis 27,283 MHz]
- [40,66 MHz bis 40,70 MHz]
- [433,05 MHz bis 434,79 MHz].

Die Wahl dieser Frequenzbänder weist den Vorteil auf, dass sie als ISM-Bänder freigegeben sind. Dabei ist zum Auftauen insbesondere das Band [40,66 MHz bis 40,70 MHz] vorteilhaft, das sich hierbei besonders hohe dielektrische Verluste an dem Wasser ergeben.

Es ist eine Ausgestaltung, dass die Niederfrequenz-Erzeugungseinrichtung einen Mikrowellengenerator aufweist. Es ergibt sich der Vorteil, dass eine besonders starke Anregung von Wasser im gefrorenen Aggregatzustand bewirkbar ist. Die niederfrequenten Wellen sind in dieser Ausgestaltung also auch Mikrowellen. Das Speisenbehandlungsgerät weist in diesem Fall insbesondere zwei Mikrowellen-Erzeugungseinrichtung, nämlich eine für höherfrequente Mikrowellen und eine für niederfrequente Mikrowellen.

Es ist eine Ausgestaltung, dass die Niederfrequenz-Erzeugungseinrichtung einen elektromagnetischen Wechselfeldgenerator aufweist, mittels dessen ein elektrisches und/oder magnetisches niederfrequentes Wechselfeld in dem Speisenbehandlungsraum erzeugbar ist. Das Einbringen von Wellen in den Speisenbehandlungsraum erfolgt hierbei durch Einbringen bzw. Erzeugen des elektrischen und/oder magnetischen Wechselfelds in dem Speisenbehandlungsraum. So behandelnde Speise eindringt und dort Moleküle, insbesondere Wassermoleküle, besonders effektiv anregen kann.

Es ist eine Ausgestaltung, dass der elektromagnetische Wechselfeldgenerator mehrere an eine elektrische Wechselspannung anlegbare Kondensatorplatten aufweist, in deren Zwischenraum sich der Speisenbehandlungsraum befindet. Dadurch ist ein elektrisches Wechselfeld in dem Speisenbehandlungsraum erzeugbar, das in die zu behandelnde Speise eindringt und speziell gefrorene Speisen effektiv erwärmen kann. Die Kondensatorplatten bilden dabei insbesondere einen Kondensator. Die Verwendung von Kondensatorplatten weist den Vorteil auf, dass sich ein besonders einfacher und preiswerter Aufbau ergibt und zudem sich der Speisenbehandlungsraum besonders gleichmäßig und großvolumig mit einem Anregungsfeld beaufschlagen lässt. Zudem wird praktisch kein Störfeld außerhalb des Speisenbehandlungsgeräts erzeugt. Es ist eine Weiterbildung, dass die Kondensatorplatten parallel und beabstandet zueinander angeordnete elektrisch leitfähige Platten sind.

Es ist eine alternative oder zusätzliche Ausgestaltung, dass der elektromagnetische Wechselfeldgenerator mindestens eine an eine elektrische Wechselspannung anlegbare Spule aufweist. Dadurch ist ein magnetisches Wechselfeld in dem Speisenbehandlungsraum erzeugbar, das in die zu behandelnde Speise eindringt und speziell gefrorene Speisen effektiv erwärmen kann. Die Verwendung von Spulen weist den Vorteil auf, dass sich ein besonders einfacher und preiswerter Aufbau ergibt ist und zudem sich der Speisenbehandlungsraum besonders gleichmäßig und großvolumig mit einem Anregungsfeld beaufschlagen lässt.

Es ist eine Weiterbildung, dass mindestens eine Kondensatorplatten und/oder mindestens eine Spule an mindestens einer Wand des Speisenbehandlungsraums angeordnet ist, z.B. an einer Decke, an einem Boden, an einer Seitenwand und/oder an einer Rückwand usw. Die Kondensatorplatte und/oder Spule kann sich in dem Speisenbehandlungsraum oder außerhalb des Speisenbehandlungsraums befinden.

Es ist eine Weiterbildung, dass die mindestens eine Kondensatorplatte und/oder Spule einen Großteil (d.h., mindestens 75%, insbesondere mindestens 90%) einer Fläche mindestens einer Wand einnimmt, was eine besonders großvolumige Beaufschlagung des Speisenbehandlungsraums mit einem elektrischen und/oder magnetischen Wechselfeld ermöglicht.

Es ist eine Ausgestaltung, dass die Kondensatorplatten und/oder mehrere Spulen mindestens eine erste Kondensatorplatte und/oder Spule aufweist, die oberhalb des Speisenbehandlungsraums (z.B. an einer Decke) angeordnet ist und mindestens eine zweite Kondensatorplatte und/oder Spule aufweist, die unterhalb des Speisenbehandlungsraums (z.B. an einem Boden) angeordnet ist. So wird eine besonders große Fläche für die Kondensatorplatten und/oder Spulen bereitgestellt, die eine besonders gleichmäßige, großvolumige Beaufschlagung des Speisenbehandlungsraums mit einem elektrischen und/oder magnetischen Wechselfeld ermöglicht. Dies wiederum ermöglicht ein besonders gleichmäßiges Auftauen von Speisen. Zudem lässt sich so ein Austreten eines elektrischen und/oder magnetischen Wechselfelds aus dem Speisenbehandlungsgerät besonders effektiv vermeiden.

Es ist eine Ausgestaltung, dass die Niederfrequenz-Erzeugungseinrichtung einen Ultraschallgenerator aufweist. Die niederfrequenten Wellen sind in dieser Ausgestaltung also auch Ultraschallwellen. Diese Ausgestaltung weist den Vorteil auf, dass ein nutzbarerer Frequenzbereich für die niederfrequenten Wellen nicht durch regulierte oder vorgegebene ISM-Frequenzbänder eingeschränkt ist.

Es ist eine Ausgestaltung, dass das Speisenbehandlungsgerät den elektromagnetischen Wechselfeldgenerator und den Ultraschallgenerator aufweist. So können Ultraschallwellen zusätzlich zu dem magnetischen Wechselfeld erzeugt werden, was ein besonders effektives Auftauen von Speise ermöglicht.

Gemäß der Erfindung weist das Speisenbehandlungsgerät mindestens einen Detektor zum Erfassen eines in dem Speisenbehandlungsraum genutzten Anteils der Mikrowellenstrahlung und/oder der niederfrequenten Wellen sowie eine Auswerteeinrichtung auf, die dazu eingerichtet ist, beruhend auf dem zugehörigen Anteil automatisch eine Energie der Wellen niedrigerer Frequenz zu verringern und eine Energie der Mikrowellen zu erhöhen, oder umgekehrt. Dies ergibt den Vorteil, dass ein Umschalten zwischen einem Auftauen und einem Garen automatisch durch das Speisenbehandlungsgerät vorgenommen werden kann. Bei dieser Ausgestaltung wird ausgenutzt, dass ein Absorptionswirkungsgrad für niederfrequente Wellen mit fortschreitender Auftauung der Speise sinkt, während ein Mikrowellen-Absorptionswirkungsgrad steigt.

Unter einem in dem Speisenbehandlungsraum genutzten Anteil kann insbesondere ein Anteil der Mikrowellenstrahlung bzw. der niederfrequenten Wellen verstanden werden, der in dem Speisenbehandlungsraum absorbiert wird, insbesondere in einer in dem Speisenbehandlungsraum untergebrachten Speise. Der Anteil kann anhand verschiedener Parameter abgebildet werden, z.B. als Mikrowellen-Absorptionswirkungsgrad, Mikrowellen-Reflexionsgrad, Absorptionswirkungsgrad der niederfrequenten Wellen, Wirkungsgrad einer Spule und/oder eines durch die Kondensatorplatten gebildeten Kondensators, Stromaufnahme einer Spule und/oder eines durch die Kondensatorplatten gebildeten Kondensators, usw. oder von Verknüpfungen davon (z.B. Verhältnissen von Wirkungsgraden). Analog zu dem genutzten Anteil kann der ungenutzte Anteil verwendet werden. Der Detektor kann z.B. ein Mikrowellendetektor, ein Magnetfeldsensor, ein elektrischer Feldsensor, ein Strommesser, ein Spannungsmesser usw. sein.

Das Einbringen der Energie der niederfrequenten Wellen und/oder der Mikrowellenstrahlung kann beispielsweise eine oder mehrere der folgenden Weiterbildungen umfassen:
- Das Einbringen von Wellen niedrigerer Frequenz wird beendet, wenn der genutzte Anteil dieser Wellen einen vorgegebenen Schwellwert erreicht oder unterschreitet.
- Das Einbringen von Mikrowellen wird begonnen, wenn der genutzte Anteil der niederfrequenten Wellen einen vorgegebenen Schwellwert erreicht oder unterschreitet.
- Das Einbringen von Mikrowellen wird begonnen, wenn der genutzte Anteil der Mikrowellen einen vorgegebenen Schwellwert erreicht oder überschreitet. Um festzustellen, ob der Schwellwert erreicht oder überschritten worden ist, können kurze Testpulse von Mikrowellen in den Speisenbehandlungsraum eingespeist werden und daraus der Anteil der genutzten Mikrowellen bestimmt werden.
- Das Einbringen der niederfrequenten Wellen und das Einbringen der Mikrowellen kann zumindest zeitweise gleichzeitig erfolgen.
- Das Einbringen der niederfrequenten Wellen und/oder das Einbringen der Mikrowellen kann in funktionaler Abhängigkeit von dem Wert des zugehörigen Anteils oder eines Anteilsverhältnisses usw. erfolgen, z.B. proportional dazu.

Allgemein kann zusätzlich, zu dem Einbringen von Mikrowellen mindestens ein elektrischer Widerstandsheizkörper aktiviert werden.

Es ist eine besonders einfach umsetzbare Ausgestaltung, dass das Speisenbehandlungsgerät eine Auswerteeinrichtung aufweist, die dazu eingerichtet ist, beruhend auf dem Anteil das Einbringen von Wellen niedrigerer Frequenz zu beenden und folgend das Einbringen von Mikrowellen und/oder das Aktivieren mindestens eines elektrischen Widerstandsheizkörpers zu beginnen.

Es ist eine Ausgestaltung, dass das Speisenbehandlungsgerät dazu eingerichtet ist, ein Speisenbehandlungsprogramm ablaufen zu lassen, bei dem der Speisenbehandlungsraum zunächst in einem Gefrierzustand gehalten wird, dann ein Auftau-Programmabschnitt aktiviert wird, bei dem der Gefrierzustand beendet wird und zumindest die Wellen niedrigerer Frequenz in den Speisenbehandlungsraum eingebracht werden, und folgend ggf. ein Gar-Programmabschnitt aktiviert wird, bei dem nur noch Mikrowellen in den Speisenbehandlungsraum eingebracht werden. Dieses Speisenbehandlungsprogramm ergibt den Vorteil, dass so eine Speise in dem Speisenbehandlungsgerät aufbewahrt und dann zeitlich gezielt auftaubar und ggf. garbar ist. Das Speisenbehandlungsprogramm kann insbesondere automatisch ablaufen.

Es ist eine Ausgestaltung, dass das Speisenbehandlungsgerät dazu eingerichtet ist, zumindest den Auftau-Programmabschnitt beruhend auf einem nutzervorgegebenen Zeitpunkt zu aktivieren. Diese Ausgestaltung ist besonders nutzfreundlich. Dabei kann ein Nutzer beispielsweise, bevor er seine Wohnung verlässt, eine Speise in den Speisenbehandlungsraum geben, wo sie zunächst gefroren gehalten wird oder eingefroren wird. Zu dem nutzervorgegebenen Zeitpunkt wird die Speise aufgetaut und ggf. folgend gegart, so dass der Nutzer dann, wenn er wieder in seine Wohnung zurückkehrt, die bereits aufgetaute oder ggf. gegarte Speise vorfindet.

Es ist eine Ausgestaltung, dass der nutzervorgegebene Zeitpunkt ein beliebiger, aber dann fest gewählter Zeitpunkt ist. Dies ergibt den Vorteil, dass das Speisenbehandlungsprogramm ohne weitere Nutzerinteraktion durchführbar ist. Der nutzervorgegebene Zeitpunkt kann ein Zeitpunkt sein, den der Nutzer in das Speisenbehandlungsgerät eingegeben hat. Es ist also eine Weiterbildung, dass der nutzervorgegebene Zeitpunkt ein vor Beginn des Speisenbehandlungsprogramms vorgegebener Zeitpunkt ist.

Es ist eine alternative oder zusätzliche Ausgestaltung, dass der nutzervorgegebene Zeitpunkt während des Ablaufs des Auftau-Programmabschnitts nutzerseitig vorgebbar ist. Dadurch wird der Vorteil erreicht, dass ein fertiges Auftauen und ggf. Garen der Speise noch genauer auf Nutzerbedürfnisse abstellbar ist. Dies ist insbesondere der Fall, falls das Speisenbehandlungsgerät eine Netzwerkschnittstelle aufweist und dazu eingerichtet ist, über die Netzwerkschnittstelle ferngesteuert zu werden. Über die Netzwerkschnittstelle kann ein Befehl eines Nutzers empfangen werden, um von dem Gefrier-Programmabschnitt auf den Auftau-Programmabschnitt überzugehen bzw. den Auftau-Programmabschnitt zu starten. Der nutzervorgegebene Zeitpunkt ist dadurch flexibel vorgebbar. In einem Nutzungsszenario kann ein Nutzer beispielsweise, bevor er seine Wohnung verlässt, eine Speise in den Speisenbehandlungsraum geben, wo sie zunächst gefroren gehalten wird oder eingefroren wird. Befindet sich der Nutzer auf dem Rückweg zu seiner Wohnung, kann er zu einem beliebigen Zeitpunkt den Auftau-Programmabschnitt starten, z.B. wenn er weiß, dass er nur noch zehn Minuten von der Wohnung entfernt ist.

Den oben beschriebenen Speisenbehandlungsvorgänge können sich beispielsweise ein oder mehrere der folgenden Speisenbehandlungsvorgänge anschließen:
- Warmhalten,
- Abkühlen,
- Kühl Halten und/oder
- Einfrieren, insbesondere Schockfrosten.

Allgemein kann das Speisenbehandlungsgerät zumindest zum Durchführen der Funktionen Gefrieren, Kühlen, Auftauen und Garen (ggf. einschließlich Erwärmen und/oder Warmhalten) ausgebildet sein und dazu entsprechende Mess-, Regel- und Steuereinrichtungen aufweisen.

Es ist eine Weiterbildung, dass das Speisenbehandlungsgerät eine Dampferzeugungsvorrichtung aufweist, um den Speisenbehandlungsraum mit Dampf beaufschlagen zu können. Dadurch wird vorteilhafterweise eine Dampfbehandlung von Speisen ermöglicht. Auch kann das Auftauen durch Einbringung von insbesondere warmem oder heißem Dampf unterstützt werden.

Die Aufgabe wird auch gelöst durch ein Verfahren zum Betreiben eines Speisenbehandlungsgeräts wie oben beschrieben, bei dem
- ein Auftau-Programmabschnitt aktiviert wird, bei dem zumindest die Wellen niedrigerer Frequenz in den Speisenbehandlungsraum eingebracht werden, und folgend
- ein Gar-Programmabschnitt aktiviert wird, bei dem zumindest überwiegend Mikrowellen in den Speisenbehandlungsraum eingebracht werden.

Das Verfahren kann analog zu dem Speisenbehandlungsgerät ausgebildet werden und weist die gleichen Vorteile auf.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden schematischen Beschreibung eines Ausführungsbeispiels, das im Zusammenhang mit der Zeichnung näher erläutert wird.

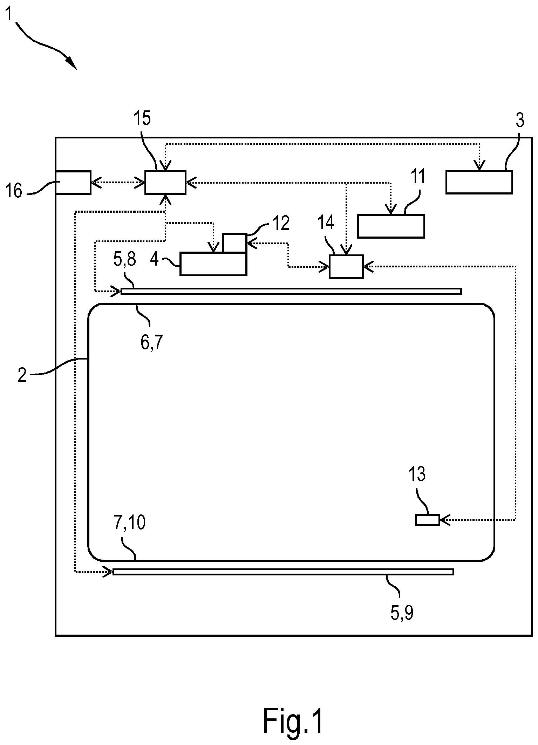

**Fig.1** zeigt als Schnittdarstellung in Frontansicht eine Skizze eines Speisenbehandlungsgeräts 1, das einen thermisch isolierten Speisenbehandlungsraum 2, ein Kälteaggregat 3 zum Kühlen des Speisenbehandlungsraums 2, eine Mikrowellen-Erzeugungseinrichtung 4 zum Einbringen von Mikrowellen mit einer zugehörigen Mikrowellenfrequenz in den Speisenbehandlungsraum 2 und eine Niederfrequenz-Erzeugungseinrichtung in Form eines elektromagnetischen Wechselfeldgenerators 5 zum Erzeugen eines Wechselfelds mit einer niedrigeren Frequenz als der Mikrowellenfrequenz in dem Speisenbehandlungsraum 2 aufweist. Der Wechselfeldgenerator 5 ist dazu an eine Wechselspannungsquelle (o. Abb.) angeschlossen.

Die Mikrowellen-Erzeugungseinrichtung 4 erzeugt Mikrowellen mit einer Mikrowellenfrequenz von z.B. 915 MHz oder 2,45 GHz, die dann in den Speisenbehandlungsraum 2 geleitet werden, insbesondere im Bereich einer Decke 6 einer den Speisenbehandlungsraum 2 begrenzenden Wandung 7.

Der Wechselfeldgenerator 5 weist eine erste Kondensatorplatte 8 und/oder eine erste Spule 8 und eine zweite Kondensatorplatte und/oder eine zweite Spule 9 auf, zwischen denen sich der Speisenbehandlungsraum 2 befindet. Vorliegend sind die erste Kondensatorplatte bzw. Spule 8 entlang der Decke 6 und die zweite Kondensatorplatte bzw. Spule 9 entlang eines Bodens 10 der Wandung 7 angeordnet. Sie nehmen mindestens 75% der jeweiligen Flächen von Decke 6 und Boden 10 ein.

Das Speisenbehandlungsgerät 1 ist dazu eingerichtet, Wechselstrom an die Kondensatorplatten bzw. Spulen 8, 9 anzulegen, so dass diese ein elektrisches bzw. magnetisches Wechselfeld erzeugen, das den Speisenbehandlungsraum 2 ausfüllt. Das elektrische bzw. magnetische Wechselfeld kann insbesondere eine Frequenz aufweisen, die in einem oder mehreren der folgenden Frequenzbänder liegt:
- [6,765 MHz bis 6,795 MHz]
- [13,553 MHz bis 13,567 MHz]
- [26,957 MHz bis 27,283 MHz]
- [40,66 MHz bis 40,70 MHz]
- [433,05 MHz bis 434,79 MHz].

Das Speisenbehandlungsgerät 1 kann zusätzlich einen Ultraschallgenerator 11 aufweisen, mittels dessen Ultraschallwellen in den Speisenbehandlungsraum 2 eingebracht werden können.

Das Speisenbehandlungsgerät 1 kann zudem einen Detektor 12 zum Erfassen eines in dem Speisenbehandlungsraum 2 genutzten Anteils der Mikrowellenstrahlung und/ einen Detektor 13 zum Erfassen eines in dem Speisenbehandlungsraum 2 genutzten Anteils des elektrisches bzw. magnetischen Wechselfelds aufweisen. Der Detektor 12 kann in die Mikrowellen-Erzeugungseinrichtung 4 integriert sein. Der Detektor 13 kann in den Wechselfeldgenerator 5 integriert sein.

Die Detektoren 12, 13 sind mit einer Auswerteeinrichtung 14 gekoppelt, die dazu eingerichtet ist, beruhend auf deren Anteil automatisch eine Stärke oder Energie des elektromagnetischen Felds zu verringern und eine eingebrachte Mikrowellenenergie zu verstärken, oder umgekehrt. Die Auswerteeinrichtung 14 kann insbesondere dazu eingerichtet sein, beruhend auf dem Anteil das Einbringen von Wellen niedrigerer Frequenz zu beenden und das Einbringen von Mikrowellen zu beginnen. Die Auswerteeinrichtung 14 kann mit einer Steuereinrichtung 15 gekoppelt sein, welche dazu eingerichtet ist, das Speisenbehandlungsgerät 1 zu steuern, insbesondere einen Betrieb des Kälteaggregats 3, der Mikrowellen-Erzeugungseinrichtung 4 und des Wechselfeldgenerators 5. Die Auswerteeinrichtung 14 kann auch in die Steuereinrichtung 15 integriert sein.

Das Speisenbehandlungsgerät 1, insbesondere dessen Steuereinrichtung 15, ist dazu eingerichtet, ein Speisenbehandlungsprogramm ablaufen zu lassen, bei dem der Speisenbehandlungsraum 2 zunächst in einem Gefrierzustand gehalten wird, dann ein Auftau-Programmabschnitt aktiviert wird, bei dem der Gefrierzustand beendet wird und zumindest die Wellen niedrigerer Frequenz in den Speisenbehandlungsraum 2 eingebracht werden, und folgend ein Gar-Programmabschnitt aktiviert wird, bei dem nur noch die Mikrowellen in den Speisenbehandlungsraum 2 eingebracht werden. Dieser nutzervorgegebene Zeitpunkt kann ein beliebiger, aber dann fest gewählter Zeitpunkt sein, der z.B. über eine Bedieneinrichtung (o. Abb.) des Speisenbehandlungsgeräts 1 oder über eine externe Instanz wie ein Smartphone usw. in das Speisenbehandlungsgerät 1 einprogrammierbar ist. Zusätzlich oder alternativ ist der nutzervorgegebene Zeitpunkt während des Ablaufs des Auftau-Programmabschnitts nutzerseitig vorgebbar. Dies kann beruhend auf einem Empfang eines entsprechenden externen Befehls durchgeführt werden.

Zur Kommunikation mit einer externen Instanz, z.B. einem mobilen Nutzerendgerät wie einem Notebook, einem Smartphone usw., kann das Speisenbehandlungsgerät 1 eine entsprechende drahtlose und/oder drahtgebundene Schnittstelle aufweisen, insbesondere eine Netzwerkschnittstelle 16. Die Netzwerkschnittstelle 16 ist mit der Steuereinrichtung 15 gekoppelt und insbesondere für eine bidirektionale Datenübertragung mit der externen Instanz ausgebildet. Die Netzwerkschnittstelle 16 kann z.B. ein WLAN-Adapter, ein Ethernet-Adapter usw. sein.

Im Folgenden werden zwei mögliche Anwendungsszenarien näher beschrieben:
A) Ein Nutzer lagert ein tiefgefrorenes Hähnchen (in einem späteren Gargefäß) in dem Speisenbehandlungsgerät bei Gefriertemperaturen, während er seinen mehrwöchigen Urlaub genießt. Nach verspäteter (also nicht genau vorausplanbarer) Rückkehr startet er vom Flughafen aus (per App) spontan den Auftau- und Garvorgang, der wegen der schnellen und schonenden ersten Auftaustufe bei Frequenzen < 902 MHz vergleichsweise schnell abläuft (z.B. ca. 20 min statt wie mit konventionellen Heizkörpern 1 h) und bei Erreichen des Schmelzpunktes von Eis nahtlos in den Erwärmungsvorgang mit Mikrowelle übergeht (das Auftauen von -18°C bis ca. -2°C wird effektiver mit niedrigen Frequenzen im Wechselfeld der Kondensatorplatten durchgeführt, während das Weitertauen und Erwärmen effektiver mit hohen Mikrowellenfrequenzen durchgeführt wird). Kommt der Nutzer zu Hause an, ist das Hähnchen verzehrfertig durchgegart, ohne dass es zwischendrin hätte umgelagert werden müssen.
B) Der Nutzer hat sich kurzentschlossen für Hackbraten entschieden und findet 1 kg Hackfleisch im Gefrierfach. Das Auftauen dauert mit konventioneller Hitze relativ lange und auch mit Mikrowellen ist die Zeitdauer lang, sofern keine äußerlich angegarten Zonen entstehen sollen. Mit der Verwendung der niederfrequenten Wellen und ggf. bereits dem Einsatz von Mikrowellen kann das Hackfleisch sehr schnell bis zu seiner Verarbeitungstemperatur von 20°C aufgetaut und erwärmt werden. Während dann der Hackbraten im Gerät ist, muss der Nutzer überraschend weg und kann den Garvorgang nicht beenden. Das Gerät gart in diesem Fall selbständig zu Ende und kühlt den Hackbraten, bis er am nächsten Tag vom Nutzer konsumiert werden kann oder friert den fertigen Hackbraten sofort ein, falls eine längere Lagerung notwendig werden sollte.

Selbstverständlich ist die vorliegende Erfindung nicht auf das gezeigte Ausführungsbeispiel beschränkt.

Allgemein kann unter "ein", "eine" usw. eine Einzahl oder eine Mehrzahl verstanden werden, insbesondere im Sinne von "mindestens ein" oder "ein oder mehrere" usw., solange dies nicht explizit ausgeschlossen ist, z.B. durch den Ausdruck "genau ein" usw.

Auch kann eine Zahlenangabe genau die angegebene Zahl als auch einen üblichen Toleranzbereich umfassen, solange dies nicht explizit ausgeschlossen ist.

### Bezugszeichenliste

- 1: Speisenbehandlungsgerät
- 2: Speisenbehandlungsraum
- 3: Kälteaggregat
- 4: Mikrowellen-Erzeugungseinrichtung
- 5: Niederfrequenz-Erzeugungseinrichtung
- 6: Decke
- 7: Wandung
- 8: Erste Kondensatorplatte / erste Spule
- 9: Zweite Kondensatorplatte / zweite Spule
- 10: Boden
- 11: Ultraschallgenerator
- 12: Detektor
- 13: Detektor
- 14: Auswerteeinrichtung
- 15: Steuereinrichtung
- 16: Netzwerkschnittstelle

## Patentansprüche

1. Speisenbehandlungsgerät (1), aufweisend
- einen thermisch isolierten Speisenbehandlungsraum (2),
- mindestens eine erste Mikrowellen-Erzeugungseinrichtung (4) zum Behandeln von Speisen in dem Speisenbehandlungsraum (2) durch Einbringen von Mikrowellen mit einer zugehörigen Mikrowellenfrequenz von 902 MHz oder mehr in den Speisenbehandlungsraum (2),
- eine zweite Funktionseinheit zum Behandeln von Speisen in dem Speisenbehandlungsraum (2) in Form einer Niederfrequenz-Erzeugungseinrichtung (5, 11) zum Einbringen von Wellen in den Speisenbehandlungsraum (2) mit einer Frequenz von weniger als 902 MHz,
- ein Kälteaggregat (3),
- mindestens einen Detektor (12, 13) zum Erfassen eines in dem Speisenbehandlungsraum (2) genutzten Anteils der Mikrowellenstrahlung und/oder der niederfrequenten Wellen sowie
- eine Auswerteeinrichtung (14), die dazu eingerichtet ist, beruhend auf dem Anteil automatisch das Einbringen von Wellen der Frequenz von weniger als 902 MHz zu verringern und das Einbringen von Mikrowellen der Mikrowellenfrequenz von 902 MHz oder mehr zu verstärken.

2. Speisenbehandlungsgerät (1) nach einem der vorhergehenden Ansprüche, wobei die mindestens eine erste Funktionseinheit zusätzlich einen elektrisch betriebenen Widerstandsheizkörper aufweist.

3. Speisenbehandlungsgerät (1) nach einem der vorhergehenden Ansprüche, wobei die niederfrequenten Wellen eine Frequenz von weniger als 500 MHz aufweisen, insbesondere eine Frequenz aufweisen, die in einem oder mehreren der folgenden Frequenzbänder liegt:
- [6,765 MHz bis 6,795 MHz]
- [13,553 MHz bis 13,567 MHz]
- [26,957 MHz bis 27,283 MHz]
- [40,66 MHz bis 40,70 MHz]
- [433,05 MHz bis 434,79 MHz].

4. Speisenbehandlungsgerät (1) nach einem der vorhergehenden Ansprüche, wobei die Niederfrequenz-Erzeugungseinrichtung einen Mikrowellengenerator aufweist.

5. Speisenbehandlungsgerät (1) nach einem der vorhergehenden Ansprüche, wobei die Niederfrequenz-Erzeugungseinrichtung (5) einen elektromagnetischen Wechselfeldgenerator aufweist, mittels dessen ein elektrisches und/oder magnetisches niederfrequentes Wechselfeld in dem Speisenbehandlungsraum (2) erzeugbar ist.

6. Speisenbehandlungsgerät (1) nach Anspruch 5, wobei der elektromagnetische Wechselfeldgenerator (5) mehrere an eine elektrisches Wechselspannung anlegbare Kondensatorplatten (8, 9) aufweist, in deren Zwischenraum sich der Speisenbehandlungsraum (2) befindet.

7. Speisenbehandlungsgerät (1) nach Anspruch 5 oder 6, wobei der elektromagnetische Wechselfeldgenerator (5) mindestens eine an eine elektrische Wechselspannung anlegbare Spule (8, 9) aufweist.

8. Speisenbehandlungsgerät (1) nach einem der Ansprüche 6 oder 7, wobei die Kondensatorplatten (8, 9) und/oder Spulen (8, 9) mindestens eine erste Kondensatorplatte (8) und/oder Spule (8) aufweist, die oberhalb des Speisenbehandlungsraums (2) angeordnet ist und mindestens eine zweite Kondensatorplatte (9) und/oder Spule (9) aufweist, die unterhalb des Speisenbehandlungsraums (2) angeordnet ist.

9. Speisenbehandlungsgerät (1) nach einem der vorhergehenden Ansprüche, wobei die Niederfrequenz-Erzeugungseinrichtung (5, 11) einen Ultraschallgenerator (11) aufweist.

10. Speisenbehandlungsgerät (1) nach einem der Ansprüche 5 bis 8 und Anspruch 9, wobei das Speisenbehandlungsgerät (1) den elektromagnetischen Wechselfeldgenerator (5) und den Ultraschallgenerator (11) aufweist.

11. Speisenbehandlungsgerät (1) nach einem der vorhergehenden Ansprüche, wobei das Speisenbehandlungsgerät (1) dazu eingerichtet ist, ein Speisenbehandlungsprogramm ablaufen zu lassen, bei dem
- der Speisenbehandlungsraum (2) zunächst in einem Gefrierzustand gehalten wird,
- dann ein Auftau-Programmabschnitt aktiviert wird, bei dem der Gefrierzustand beendet wird und zumindest die Wellen niedrigerer Frequenz in den Speisenbehandlungsraum (2) eingebracht werden, und folgend
- ein Gar-Programmabschnitt aktiviert wird, bei dem zumindest überwiegend nur noch Mikrowellen in den Speisenbehandlungsraum (2) eingebracht werden.

12. Speisenbehandlungsgerät (1) nach Anspruch 11, wobei der nutzervorgegebene Zeitpunkt ein beliebiger, aber dann fest gewählter Zeitpunkt ist.

13. Speisenbehandlungsgerät (1) nach einem der Ansprüche 11 oder 12, wobei der nutzervorgegebene Zeitpunkt während des Ablaufs des Auftau-Programmabschnitts nutzerseitig vorgebbar ist.

14. Speisenbehandlungsgerät (1) nach einem der vorhergehenden Ansprüche, wobei die zweite Funktionseinheit eine weitere Mikrowellen-Erzeugungseinrichtung ist.

15. Verfahren zum Betreiben eines Speisenbehandlungsgeräts (1) nach einem der vorhergehenden Ansprüche, bei dem
- ein Auftau-Programmabschnitt aktiviert wird, bei dem zumindest die Wellen niedrigerer Frequenz in den Speisenbehandlungsraum (2) eingebracht werden, und folgend
- ein Gar-Programmabschnitt aktiviert wird, bei dem zumindest überwiegend nur noch Mikrowellen in den Speisenbehandlungsraum (2) eingebracht werden.

## Claims

1. Food treatment appliance (1), having
- a thermally insulated food treatment chamber (2),
- at least one first microwave generation facility (4) for treating food in the food treatment chamber (2) by introducing microwaves with an associated microwave frequency of 902 MHz or more into the food treatment chamber (2),
- a second function unit for treating food in the food treatment chamber (2) in the form of a low-frequency generation facility (5, 11) for introducing waves with a frequency of less than 902 MHz into the food treatment chamber (2),
- a refrigeration unit (3),
- at least one detector (12, 13) for detecting a portion of the microwave radiation and/or the low-frequency waves used in the food treatment chamber (2) as well as
- an evaluation facility (14), which is designed to reduce the introduction of lower-frequency waves of less than 902 MHz and increase the introduction of microwaves of 902 MHz or more automatically based on portion.

2. Food treatment appliance (1) according to one of the preceding claims, wherein the at least one first function unit additionally has one electrically operated resistance heating unit.

3. Food treatment appliance (1) according to one of the preceding claims, wherein the low-frequency waves have a frequency of less than 500 MHz, in particular a frequency which is in one or more of the following frequency bands:
- [6.765 MHz to 6.795 MHz]
- [13.553 MHz to 13.567 MHz]
- [26.957 MHz to 27.283 MHz]
- [40.66 MHz to 40.70 MHz]
- [433.05 MHz to 434.79 MHz].

4. Food treatment appliance (1) according to one of the preceding claims, wherein the low-frequency generation facility has a microwave generator.

5. Food treatment appliance (1) according to one of the preceding claims, wherein the low-frequency generation facility (5) has an electromagnetic alternating field generator, which can be used to generate an electric and/or magnetic low-frequency alternating field in the food treatment chamber (2).

6. Food treatment appliance (1) according to claim 5, wherein the electromagnetic alternating field generator (5) has a number of capacitor plates (8, 9) that can be connected to an electric alternating voltage, with the food treatment chamber (2) located in the space between.

7. Food treatment appliance (1) according to claim 5 or 6, wherein the electromagnetic alternating field generator (5) has at least one coil (8, 9) that can be connected to an electric alternating voltage.

8. Food treatment appliance (1) according to one of claims 6 or 7, wherein the capacitor plates (8, 9) and/or coils (8, 9) have at least one first capacitor plate (8) and/or coil (8), which is arranged above the food treatment chamber (2), and at least one second capacitor plate (9) and/or coil (9), which is arranged below the food treatment chamber (2).

9. Food treatment appliance (1) according to one of the preceding claims, wherein the low-frequency generation facility (5, 11) has an ultrasound generator (11).

10. Food treatment appliance (1) according to one of claims 5 to 8 and claim 9, wherein the food treatment appliance (1) comprises the electromagnetic alternating field generator (5) and the ultrasound generator (11).

11. Food treatment appliance (1) according to one of the preceding claims, wherein the food treatment appliance (1) is designed to run a food treatment program, in which
- the food treatment chamber (2) is initially kept in a freezing state,
- then a defrosting program segment is activated, in which the freezing state is terminated and at least the lower-frequency waves are introduced into the food treatment chamber (2) and then
- a cooking program segment is activated, in which predominantly only microwaves are introduced into the food treatment chamber (2).

12. Food treatment appliance (1) according to claim 11, wherein the time preset by the user is any time, which is then permanently selected.

13. Food treatment appliance (1) according to one of claims 11 or 12, wherein the time preset by the user can be preset by said user during the course of the defrosting program segment.

14. Food treatment appliance (1) according to one of the preceding claims, wherein the second function unit is a further microwave generation facility.

15. Method for operating a food treatment appliance (1) according to one of the preceding claims, wherein
- a defrosting program segment is activated, in which at least the lower-frequency waves are introduced into the food treatment chamber (2), and then
- a cooking program segment is activated, in which at least predominantly only microwaves are introduced into the food treatment chamber (2).

## Revendications

1. Unité de traitement d'aliments (1) comprenant :
- un compartiment de traitement d'aliments thermiquement isolé (2),
- au moins un premier dispositif générateur de micro-ondes (4) permettant de traiter des aliments dans le compartiment de traitement d'aliments (2) en introduisant des micro-ondes à une fréquence de micro-ondes associée de 902 MHz ou plus dans le compartiment de traitement d'aliments (2),
- une seconde unité fonctionnelle permettant de traiter des aliments dans le compartiment de traitement d'aliments (2) sous la forme d'un dispositif générateur de basse fréquence (5, 11) destiné à introduire des ondes dans le compartiment de traitement d'aliments (2) à une fréquence inférieure à 902 MHz,
- un groupe frigorifique (3),
- au moins un détecteur (12, 13) destiné à détecter une partie du rayonnement de micro-ondes et/ou des ondes basse fréquence utilisée dans le compartiment de traitement d'aliments (2), et
- un dispositif d'évaluation (14) qui est conçu afin de réduire automatiquement l'introduction d'ondes présentant la fréquence inférieure à 902 MHz et afin d'amplifier l'introduction de micro-ondes présentant une fréquence de micro-ondes de 902 MHz ou plus, sur la base de la proportion.

2. Unité de traitement d'aliments (1) selon l'une quelconque des revendications précédentes, dans laquelle la au moins première unité fonctionnelle comprend en outre un corps chauffant à résistance actionné électriquement.

3. Unité de traitement d'aliments (1) selon l'une quelconque des revendications précédentes, dans laquelle les ondes basse fréquence ont une fréquence inférieure à 500 MHz, en particulier une fréquence dans une ou plusieurs des bandes de fréquence suivantes :
- [6,765 MHz à 6,795 MHz]
- [13,553 MHz à 13,567 MHz]
- [26,957 MHz à 27,283 MHz]
- [40,66 MHz à 40,70 MHz]
- [433,05 MHz à 434,79 MHz].

4. Unité de traitement d'aliments (1) selon l'une quelconque des revendications précédentes, dans laquelle ledit dispositif générateur de basse fréquence comprend un générateur de micro-ondes.

5. Unité de traitement d'aliments (1) selon l'une quelconque des revendications précédentes, dans laquelle le dispositif générateur de basse fréquence (5) présente un générateur de champ électromagnétique alternatif, au moyen duquel un champ alternatif basse fréquence électrique et/ou magnétique peut être généré dans le compartiment de traitement d'aliments (2).

6. Unité de traitement d'aliments (1) selon la revendication 5, dans laquelle le générateur de champ électromagnétique alternatif (5) comporte une pluralité de plaques de condensateur (8, 9) auxquelles peut être appliquée une tension électrique alternative et dans l'espace intermédiaire desquelles se trouve le compartiment de traitement d'aliments (2).

7. Unité de traitement d'aliments (1) selon la revendication 5 ou 6, dans laquelle le générateur de champ électromagnétique alternatif (5) comporte au moins une plaque de condensateur (8, 9) à laquelle peut être appliquée une tension électrique alternative.

8. Unité de traitement d'aliments (1) selon l'une des revendications 6 ou 7, dans laquelle les plaques de condensateur (8, 9) et/ou les bobines (8, 9) présentent au moins une première plaque de condensateur (8) et/ou bobine (8) qui est agencée au-dessus du compartiment de traitement d'aliments (2) et présente au moins une seconde plaque de condensateur (9) et/ou bobine (9) qui est agencée en-dessous du compartiment de traitement d'aliments (2).

9. Unité de traitement d'aliments (1) selon l'une quelconque des revendications précédentes, dans laquelle ledit dispositif générateur de basse fréquence (5, 11) comprend un générateur d'ultrasons (11).

10. Unité de traitement d'aliments (1) selon l'une quelconque des revendications 5 à 8 et la revendication 9, dans laquelle l'unité de traitement d'aliments (1) comprend le générateur de champ électromagnétique alternatif (5) et le générateur d'ultrasons (11).

11. Unité de traitement d'aliments (1) selon l'une quelconque des revendications précédentes, dans laquelle l'unité de traitement d'aliments (1) est conçue afin d'exécuter un programme de traitement d'aliments, dans lequel :
- le compartiment de traitement d'aliments (2) est initialement maintenu dans un état de congélation,
- ensuite, une section de programme de décongélation est activée, via laquelle l'état de congélation va être arrêté et au moins les ondes de fréquence plus basse sont introduites dans le compartiment de traitement d'aliments (2), puis
- une section de programme de cuisson est activée, via laquelle au moins des micro-ondes principalement seules sont introduites dans le compartiment de traitement d'aliments (2).

12. Unité de traitement d'aliments (1) selon la revendication 11, dans laquelle ledit temps défini par l'utilisateur est un temps quelconque sélectionné, mais ensuite fixé.

13. Unité de traitement d'aliments (1) selon l'une des revendications 11 ou 12, dans laquelle le temps défini par l'utilisateur peut être prédéfini par l'utilisateur au cours de la section de programme de décongélation.

14. Unité de traitement d'aliments (1) selon l'une quelconque des revendications précédentes, dans laquelle ladite seconde unité fonctionnelle est un dispositif générateur de micro-ondes supplémentaire.

15. Procédé permettant de faire fonctionner une unité de traitement d'aliments (1) selon l'une des revendications précédentes, dans lequel :
- une section de programme de décongélation est activée, via laquelle au moins les ondes de fréquence plus basse sont introduites dans le compartiment de traitement d'aliments (2), puis
- une section de programme de cuisson est activée, via laquelle au moins des micro-ondes principalement seules sont introduites dans le compartiment de traitement d'aliments (2).
